# EUROPÄISCHE PATENTSCHRIFT

(11) **EP 1 058 867 B1**
(45) Veröffentlichungstag und Bekanntmachung des Hinweises auf die Patenterteilung: **18.09.2002**
(21) Anmeldenummer: 99934395.7
(22) Anmeldetag: 20.01.1999
(51) Int. Cl.: G05B 19/02

(54) **VERFAHREN ZUR AKTIVIERUNG VON FUNKTIONEN EINES ELEKTRISCHEN GERÄTES**
METHOD FOR ACTIVATING THE FUNCTIONS OF AN ELECTRICAL APPARATUS
PROCEDE D'ACTIVATION DE FONCTIONS D'UN APPAREIL ELECTRIQUE

(30) Priorität: 04.02.1998 DE 19804068
(43) Veröffentlichungstag der Anmeldung: 13.12.2000
(73) Patentinhaber: ROBERT BOSCH GMBH, 70442 Stuttgart (DE)
(72) Erfinder: Scherf, Torsten, 31134 Hildesheim (DE); Vogt, Lothar, 31199 Barienrode (DE); Klaas, Udo, 31319 Rhende (DE)
(86) Internationale Anmeldenummer: DE9900115
(87) Internationale Veröffentlichungsnummer: WO99040491

(56) Entgegenhaltungen:
- EP-A- 0 675 018

## Beschreibung

### Stand der Technik

Die Erfindung geht von einem Verfahren zur Aktivierung von Funktionen eines elektrischen Gerätes nach der Gattung des Hauptanspruchs aus.

Verfahren zur Aktivierung von Funktionen eines elektrischen Gerätes sind bereits beispielsweise für Autoradios bekannt. Dabei können Funktionen des Autoradios durch Betätigung von Bedienelementen einer Bedieneinheit des Autoradios von einem Benutzer aktiviert werden. Aus der EP 0 675 018 A1 ist eine Informationsvorrichtung für bedienbare Geräte von Kraftfahrzeugen bekannt. Die Informationsvorrichtung umfaßt einen Bildschirm und eine Auswahleinrichtung für verschiedene Betriebsarten der Bildschirmanzeige. Dabei ist eine eigene Betriebsart vorgesehen, die als Bedienerinformation bezeichnet wird und bei der den Geräten individuell zugeordnete Bedienelemente bei ihrer Betätigung eine Steuervorrichtung für einen Speicher ansteuern, die daraus den Bedienelementen zugeordnete Daten entnimmt und zur Anzeige auf dem Bildschirm bringt.

### Vorteile der Erfindung

Das erfindungsgemäße Verfahren mit den Merkmalen des Hauptanspruchs hat demgegenüber den Vorteil, daß eine in einem dem Gerät zugeordneten Speicherbereich abgelegte Testroutine von einer Steuerung des elektrischen Gerätes abgearbeitet wird, daß die Steuerung aufgrund von in der Testroutine vorgegebenen Steuerbefehlen mindestens eine Funktion des elektrischen Gerätes aktiviert und daß an einer Wiedergabevorrichtung des elektrischen Gerätes Informationen über die gerade aktivierte Funktion wiedergegeben werden.

Auf diese Weise kann ein Lernprogramm realisiert werden, das den Benutzer durch die Bedienung des elektrischen Gerätes führt. Die Funktionen des elektrischen Gerätes werden dabei nacheinander gemäß der Abarbeitung der Testroutine durch die Steuerung des elektrischen Gerätes an der Wiedergabevorrichtung dem Benutzer vorgestellt. Dies führt zu einer deutlichen Erhöhung des Bedienkomforts für den Benutzer, da der Benutzer nicht mehr eine Bedienungsanleitung durchlesen muß. Außerdem kann der Benutzer die Bedienung des elektrischen Gerätes gleich am elektrischen Gerät selbst üben, so daß Mißverständnisse, wie sie beim Lesen der Bedienungsanleitung auftreten können, weitgehend ausgeschlossen sind. Außerdem ergibt sich eine enorme Kosteneinsparung, da auf Bedienungsanleitungen ganz verzichtet werden kann. Solche Bedienungsanleitungen werden durch die Beschreibung einer zunehmenden Zahl von Leistungsmerkmalen entsprechender elektrischer Geräte immer umfangreicher und verursachen dadurch auch immer größere Verpackungsprobleme und Kosten. Diese Nachteile werden durch das erfindungsgemäße Verfahren vermieden, bei dem auf eine separate Bedienungsanleitung in Schriftform verzichtet werden kann.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist es, daß in Abhängigkeit der Informationen mindestens ein Bedienelement einer Bedieneinheit des elektrischen Gerätes der mindestens einen Funktion zugewiesen wird, so daß die mindestens eine Funktion durch das mindestens eine Bedienelement ansteuerbar ist. Auf diese Weise kann das Lernprogramm die mindestens eine Funktion interaktiv dem Benutzer vorstellen, das heißt, der Benutzer kann bereits bei Ablauf des Lernprogramms die Bedienung des elektrischen Gerätes am elektrischen Gerät selbst unter Anleitung durch die an der Wiedergabevorrichtung wiedergegebenen Informationen ausprobieren. Der Benutzer wird somit am Gerät selbst trainiert. Dadurch wird ihm eine spätere Bedienung des elektrischen Gerätes erleichtert.

Ein weiterer Vorteil besteht darin, daß an der Wiedergabevorrichtung durch die Informationen Hinweise zur Aktivierung der mindestens einen Funktion durch mindestens ein Bedienelement der Bedieneinheit des elektrischen Gerätes wiedergegeben werden. Auf diese Weise wird die Funktionalität des elektrischen Gerätes erhöht und zur Wiedergabe der Bedienungsanleitung mitverwendet. Eine separate Bedienungsanleitung kann somit eingespart und ein eindeutiger Bezug der an der Wiedergabevorrichtung wiedergegebenen Informationen zu den für die Aktivierung der mindestens einen Funktion erforderlichen Bedienelementen hergestellt werden, vor allem dann, wenn eine örtliche Zuordnung der Bedienelemente zur Wiedergabevorrichtung am elektrischen Gerät besteht. Dabei können beispielsweise Bedienelemente benachbart zu einer als Anzeigevorrichtung ausgebildeten Wiedergabevorrichtung angeordnet sein oder gar für eine Aktivierung einer Funktion zu betätigende Bedienelemente gegebenenfalls in einer entsprechend vorgegebenen Reihenfolge beleuchtet werden.

Ein weiterer Vorteil besteht darin, daß die Testroutine in Abhängigkeit der Betätigung mindestens eines Bedienelementes der Bedieneinheit des elektrischen Gerätes von der Steuerung abgearbeitet wird. Auf diese Weise kann der Benutzer die Reihenfolge der Abarbeitung der Testroutine seinen Bedürfnissen anpassen, das heißt zum Beispiel solche durch dies Testroutine beschriebenen Funktionen des elektrischen Gerätes überspringen, deren Bedienung er schon kennt. Somit wird der Bedienkomfort und die Benutzerfreundlichkeit weiter erhöht.

Ein weiterer Vorteil besteht darin, daß die an der Wiedergabevorrichtung in Abhängigkeit der Testroutine wiedergebbaren Daten in komprimierter Form im Speicherbereich abgelegt werden. Auf diese Weise läßt sich Speicherplatz einsparen. Alternativ können mehr Informationen bzw. Informationen über mehr Funktionen im Speicherbereich abgespeichert werden.

Ein weiterer Vorteil besteht darin, daß beim Abarbeiten der Testroutine durch die Steuerung eine Überprüfung der mindestens einen Funktion durchgeführt wird. Auf diese Weise wird die Funktionalität der Testroutine erhöht. Gleichzeitig wird der Bedienkomfort erhöht, da der Benutzer durch die Testroutine bei einer Funktionsprüfung des elektrischen Gerätes mittels der ihm von der Wiedergabevorrichtung angebotenen Informationen unterstützt wird.

Ein weiterer Vorteil besteht darin, daß in Abhängigkeit der Testroutine im Speicherbereich abgelegte Testsignale für Funktionseinstellungen des elektrischen Gerätes von der Steuerung aufgerufen werden. Auf diese Weise kann der Benutzer auch für Funktionseinstellungen, beispielsweise für Equalizereinstellungen durch die Testroutine unterstützt werden, die die erforderlichen Testsignale ohne Bedienaufwand für den Benutzer verfügbar macht und die Funktionseinstellungen gegebenenfalls durch entsprechende Informationen an der Wiedergabevorrichtung unterstützt. Somit wird der Bedienkomfort für den Benutzer weiter erhöht.

Ein weiterer Vorteil besteht darin, daß ein Speichermedium, das den Speicherbereich umfaßt und in das elektrische Gerät eingelegt ist, nur mit einer vorgegebenen Tastenkombination an der Bedieneinheit freigegeben wird. Auf diese Weise ist ein Schutz des Speichermediums vor Diebstahl auch ohne Zugangsberechtigungskarte möglich. Das Lernprogramm könnte somit von mehreren Benutzern beispielsweise in einem Fachgeschäft zum Kennenlernen des elektrischen Gerätes angewendet werden. Das elektrische Gerät wäre dann auch ohne individuelle Zugangsberechtigungskarte für die verschiedenen Benutzer betriebsbereit und das Speichermedium dennoch vor Diebstahl geschützt.

Ein weiterer Vorteil besteht darin, daß die Steuerbefehle der Testroutine in Lücken zwischen Sprach- und/oder Musikdaten auf einem als Audio-Compact-Disc ausgebildeten Speichermedium 40 gespeichert werden. Auf diese Weise kann als Speichermedium eine Audio-Compact-Disc verwendet werden, so daß der Herstellungs- und Materialaufwand für ein spezielles Speichermedium zur Speicherung von Steuerbefehlen eingespart werden kann. Für den Benutzer wird der Bedienkomfort erhöht, da er einheitlich Audio-Compact-Discs sowohl zur Bedienungsanleitung als auch zum Musikgenuß verwenden kann.

### Zeichnung

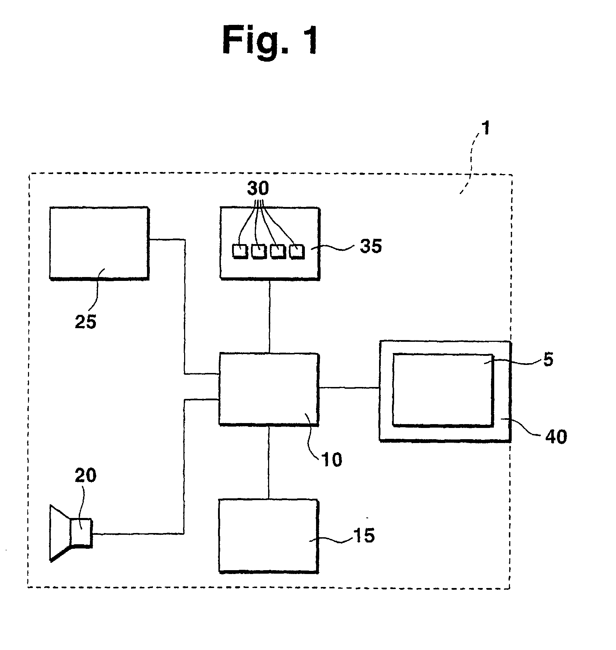

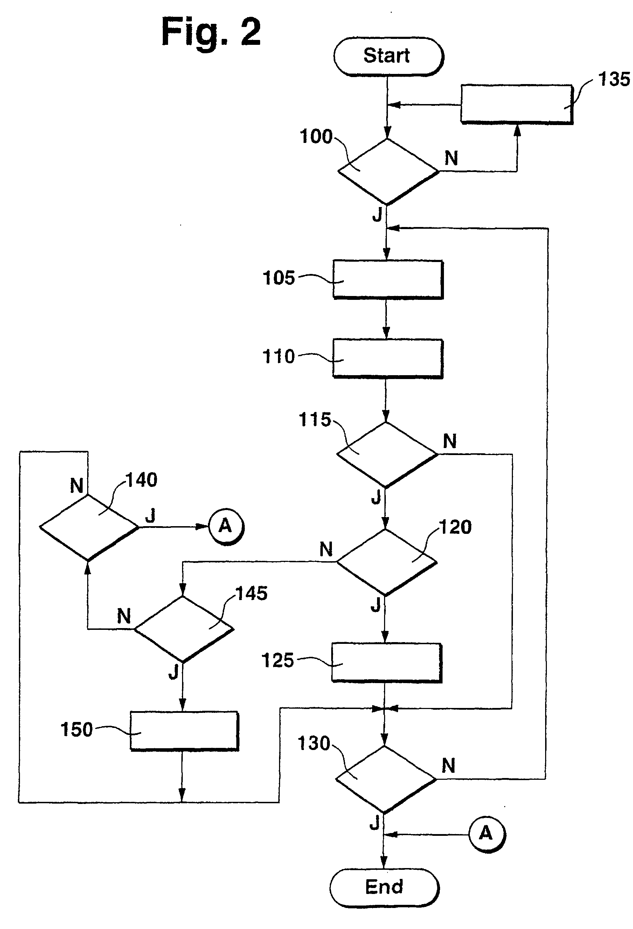

Ein Ausführungsbeispiel der Erfindung ist in der Zeichnung dargestellt und in der nachfolgenden Beschreibung näher erläutert. Es zeigen Figur 1 ein Blockschaltbild eines als Autoradio ausgebildeten elektrischen Gerätes und Figur 2 einen Ablaufplan für eine Steuerung des elektrischen Gerätes.

### Beschreibung des Ausführungsbeispiels

In Figur 1 kennzeichnet 1 ein als Autoradio ausgebildetes elektrisches Gerät. Dem Autoradio 1 ist ein Speicherbereich 5 zugeordnet. Der Speicherbereich 5 ist in diesem Ausführungsbeispiel auf einem als Compact-Disc ausgebildeten Speichermedium 40 vorgesehen, kann jedoch auch fest im elektrischen Gerät 1 oder außerhalb des elektrischen Gerätes 1, aber in Zuordnung zum elektrischen Gerät 1, angeordnet bzw. an das elektrische Gerät 1 angeschlossen und beispielsweise als Nur-Lese-Speicher (ROM) oder Schreib/Lesespeicher (RAM) ausgebildet sein. Das Speichermedium 40 kann auch als Zugangsberechtigungskarte ausgebildet sein, deren gespeicherte Daten von einem entsprechenden Kartenleser in einem gegebenenfalls im Autoradio 1 angeordneten Kartenschacht gelesen werden. Die Zugangsberechtigungskarte kann dabei einen Speicherchip und/oder einen Magnetstreifen und/oder dergleichen zur Aufnahme des Speicherbereiches 5 aufweisen.

Die Compact-Disc 40 ist dabei in ein Compact-Disc-Laufwerk des Autoradios 1 eingelegt. Das Compact-Disc-Laufwerk kann jedoch auch extern, beispielsweise in Form eines Compact-Disc-Changers an das Autoradio 1 angeschlossen sein. Das Autoradio 1 umfaßt eine Steuerung 10, die mit dem Speicherbereich 5 verbunden ist. An die Steuerung 10 ist außerdem eine Bedieneinheit 35 angeschlossen, die Bedienelemente 30 umfaßt. An die Steuerung 10 ist weiterhin eine als Lautsprecher ausgebildete akustische Wiedergabeeinheit 20 angeschlossen. Optional können an die Steuerung 10 auch eine als Display ausgebildete Anzeigevorrichtung 15 und ein Drucker 25 angeschlossen sein.

In Fachgeschäften werden derzeit viele Autoradios präsentiert, deren Bedienfronten verhältnismäßig gleichförmig aussehen und in der Regel eine ähnliche Anordnung der Bedienelemente vorsehen. Gerade in dem immer mehr an Bedeutung gewinnenden Vertriebskanal der Fachmärkte ist Verkaufspersonal knapp und die Beratungsleistung tritt gegenüber dem Preisargument zunehmend in den Hintergrund. Oftmals fehlt dem Fachpersonal daher die Zeit, ihren Kunden mehr als die Basisleistungsmerkmale der verschiedenen Autoradios zu erklären.

Ein weiteres Problem stellen für den Benutzer die aufgrund der Zunahme der Anzahl von Leistungsmerkmalen immer umfangreicheren Bedienungsanleitungen dar. Dies führt dazu, daß dem Benutzer in der Regel Zeit und Motivation zum Durchlesen der Bedienungsanleitung fehlen. Auch ist der Bedienungsanleitung nicht immer widerspruchsfrei die Funktionsweise des entsprechenden Gerätes entnehmbar.

Gemäß dem beschriebenen Ausführungsbeispiel sind die Autoradios in der Lage, sich selbst zu erklären und sparen dem Handel auch Verkaufspersonal ein.

Im Speicherbereich 5 der Compact-Disc 40, die auch als CD-ROM ausgebildet sein kann, ist eine Testroutine abgelegt. Die Testroutine wird von der Steuerung 10 abgearbeitet und dient der Aktivierung von Funktionen des Autoradios 1. Während der Abarbeitung der Testroutine veranlaßt die Steuerung 10 die Wiedergabe von Daten am Display 15 und/oder am Lautsprecher 20 und/oder am Drucker 25. Die Daten sind dabei ebenfalls im Speicherbereich 5 der Compact-Disc 40 abgelegt. Nach Einlegen der Compact-Disc 40 in das entsprechende, dem Autoradio 1 zugeordnete Laufwerk und Betätigung einer der Bedienelemente 30 wird ein Vorführprogramm gestartet, bei dem eine beispielsweise animierte graphische Darstellung auf dem Display 15 gegebenenfalls kombiniert mit Sprach- und/oder Musikausgabe auf das Autoradio 1 aufmerksam macht. Gegebenenfalls kann durch eines der Bedienelemente 30 die Steuerung 10 veranlaßt werden, zwischen akustischer Wiedergabe am Lautsprecher 20 und optischer Wiedergabe am Display 15 umzuschalten. Wendet sich ein Benutzer dem Autoradio 1 zu und betätigt eines der Bedienelemente 30, so greift er interaktiv in den Programmablauf der Testroutine ein und startet damit ein Unterprogramm, das ihn interaktiv durch Funktionen des Autoradios 1, mindestens jedoch durch eine solche Funktion führt. Die Steuerung 10 aktiviert aufgrund von in der Testroutine beziehungsweise dem entsprechenden Unterprogramm vorgegebenen Steuerbefehlen die entsprechenden Funktionen des Autoradios 1. Am Display 15 und/oder am Lautsprecher 20 und/oder am Drucker 25 werden dann Informationen über die gerade aktivierte Funktion wiedergegeben. Durch die Informationen werden Hinweise zur Aktivierung der entsprechenden Funktionen durch mindestens eines der Bedienelemente 30 wiedergegeben. Somit werden dem Benutzer die Leistungsmerkmale des Autoradios 1 detailliert erläutert.

Der Benutzer wird beispielsweise mittels einer auf dieser Compact-Disc 40 gespeicherten sprachlichen Benutzerführung durch die Funktionen des Autoradios 1 geführt. Die notwendigen Steuerbefehle sind in kurzen Lücken zwischen Sprach- und/oder Musikdaten gespeichert. Die Steuerung 10 des Autoradios 1 dekodiert diese Daten. Bei Erkennen von bestimmten eingefügten Datensequenzen werden diese als Steuerbefehle ausgewertet. Auf diese Weise lassen sich auch herkömmliche Audio-Compact-Discs als Speichermedium 40 verwenden. Die Compact-Disc 40 kann auch einen Teil enthalten, der dem Datenformat einer CD-ROM entspricht. Darauf können zum Beispiel eine herkömmliche Bedienungsanleitung des Autoradios 1, eine Einbauanleitung für den Einbau des Autoradios 1 in einen Einbauschacht eines Kraftfahrzeugs und/oder dergleichen gespeichert sein.

Die Testroutine bzw. das entsprechende Unterprogramm kann in Abhängigkeit der Betätigung mindestens eines der Bedienelemente 30 von der Steuerung 10 abgearbeitet werden. Das bedeutet, daß der Benutzer durch Betätigung mindestens eines der Bedienelemente 30 den Ablauf und Inhalt der Testroutine bzw. des entsprechenden Unterprogramms selbst steuern und somit seinen eigenen Bedürfnissen anpassen kann. Der Benutzer kann sich somit von der Testroutine bzw. dem entsprechenden Unterprogramm nur die Funktionen des Autoradios 1 erklären lassen, die ihn interessieren, oder die er noch nicht kennt. Andere Funktionen kann er überspringen.

Weiterhin kann vorgesehen sein, daß in Abhängigkeit der wiedergegebenen Informationen mindestens eines der Bedienelemente 30 der gerade durch die Testroutine bzw. dem entsprechenden Unterprogramm aktivierten Funktion zugewiesen wird, so daß diese Funktion durch das mindestens eine Bedienelement 30 ansteuerbar ist. Somit kann der Benutzer eine gerade mittels der Testroutine bzw. dem entsprechenden Unterprogramm aktivierte Funktion interaktiv anwenden und beispielsweise zum Kennenlernen ausprobieren. Ist das Display 15 der Bedieneinheit 35 bzw. den Bedienelementen 30 benachbart angeordnet, so können die am Display 15 wiedergegebenen Informationen den entsprechenden Bedienelementen 30 örtlich zugeordnet werden und gegebenenfalls zusätzlich zur Markierung beleuchtet werden. Auf diese Weise werden Fehlbedienungen für den Benutzer verhindert.

Die am Lautsprecher 20 bei der Abarbeitung der Testroutine bzw. dem entsprechenden Unterprogramm wiedergebbaren Sprachsignale sind im Speicherbereich 5 digitalisiert abgespeichert und müssen vor der Wiedergabe am Lautsprecher 20 von der Steuerung 10 in analoge Sprachsignale umgewandelt werden. Um Speicherplatz im Speicherbereich 5 zu sparen, können die Sprachsignale dort als Monosprachsignale digital abgespeichert sein, da es bei dem Lernprogramm nicht auf optimale Sprach- bzw. Tonqualität ankommt. Auch die am Display 15 und/oder am Drucker 25 wiedergebbaren Daten können im Speicherbereich 5 digitalisiert abgelegt werden. Die Einsparung von Speicherplatz im Speicherbereich 5 für die Speicherung der am Display 15 und/oder am Lautsprecher 20 und/oder am Drucker 25 wiedergebbaren Daten kann auch durch Verringerung der Abtastrate bei der Digitalisierung dieser Daten vor der Speicherung realisiert werden. Auf diese Weise kann eine größere Datenmenge im Speicherbereich 5 der Compact-Disc 40 abgespeichert werden und dadurch ein größerer Leistungsumfang des Autoradios 1 für die Abarbeitung des Lernprogramms und die Beschreibung der Funktionen des Autoradios 1 berücksichtigt werden. Es lassen sich dann mehr Daten im Speicherbereich 5 speichern und somit mehr Leistungsmerkmale des Autoradios 1 durch das Lernprogramm beschreiben.

Für die Einsparung von Speicherplatz im Speicherbereich 5 können die in Abhängigkeit der Testroutine bzw. des entsprechenden Unterprogramms wiedergebbaren Daten auch auf andere Weise, beispielsweise durch Verwendung geeigneter Codierverfahren komprimiert und im Speicherbereich 5 abgelegt werden.

Es kann weiterhin vorgesehen sein, daß beim Abarbeiten der Testroutine durch die Steuerung 10 eine Überprüfung mindestens einer der Funktionen des Autoradios 1 durchgeführt wird.

Weiterhin könnten im Speicherbereich 5 Testsignale abgelegt sein, die bei der Abarbeitung der Testroutine von der Steuerung 10 aufgerufen werden können. Die Testsignale können zum Beispiel gewobbelte Signale sein und von der Steuerung 10 für eine automatisierte Equalizereinstellung ausgewertet werden. Es kann jedoch auch vorgesehen sein, daß die Steuerung 10 eine Wiedergabe der Testsignale am Lautsprecher 20 und/oder am Display 15 veranlaßt, so daß der Benutzer über mindestens eines der Bedienelemente 30 die beispielhaft angeführten Equalizereinstellungen aufgrund der wiedergegebenen Testsignale eigenhändig nach seinen Bedürfnissen vornehmen kann.

Speziell für den Anwendungsfall der Vorstellung des Autoradios 1 im Fachgeschäft kann vorgesehen sein, das Autoradio 1 ohne Zugangsberechtigungskarte betriebsbereit vorzusehen, so daß die Compact-Disc 40 ohne Zugangsberechtigungskarte lauffähig ist. Ein Verlust einer solchen Zugangsberechtigungskarte würde dann nicht zum Ausfall des entsprechenden Autoradios 1 führen. Um dennoch einem Diebstahl der Compact-Disc 40 vorzubeugen und das Fachpersonal von der Aufsichtspflicht zu entbinden, kann vorgesehen sein, die Compact-Disc 40 nur mit einer vorgegebenen Tastenkombination an der Bedieneinheit 35 freizugeben.

Für den Fall, daß ein Autoradio 1 gemäß der Erfindung den Gebrauch einer Bedienungsanleitung überflüssig macht, könnten auf der Compact-Disc 40 auch Service-Telefonnummern, Adressen von Service-Zentren, Katalogseiten und ein Anlagen-Einmeßprogramm zur Funktionsprüfung des Autoradios 1 abgespeichert sein und durch eine eigene Bedienfunktion zur Anzeige am Display 15 gebracht werden. Weiterhin könnten auf der Compact-Disc 40 auch Informationen über eine gesamte Gerätefamilie abgespeichert und mittels einer eigenen Informationsbedienfunktion des Autoradios 1 am Display 15 zur Anzeige gebracht werden.

In Figur 2 ist ein Ablaufplan für die Funktionsweise der Steuerung zur Abarbeitung des Lernprogramms dargestellt. Bei einem Programmpunkt 100 prüft die Steuerung 10, ob die Testroutine durch Betätigen eines der Bedienelemente 30 aktiviert wurde. Ist dies der Fall, so wird zu einem Programmpunkt 105 verzweigt, andernfalls wird zu einem Programmpunkt 135 verzweigt. Bei Programmpunkt 135 wird eine Warteschleife durchlaufen. Anschließend wird zu Programmpunkt 100 zurückverzweigt. Bei Programmpunkt 105 veranlaßt die Steuerung 10 die Aktivierung einer Funktion des Autoradios 1. Anschließend wird zu einem Programmpunkt 110 verzweigt. Bei Programmpunkt 110 veranlaßt die Steuerung 10 eine Wiedergabe von im Speicherbereich 5 gespeicherten Informationen über die gerade aktivierte Funktion des Autoradios 1 am Display 15 und/oder am Lautsprecher 20 und/oder am Drucker 25. Auf diese Weise wird dem Benutzer so ermöglicht, die gerade am Autoradio 1 durch die Testroutine aktivierte Funktion kennenzulernen, da die Informationen Hinweise zur Aktivierung der Funktion mittels mindestens einem der Bedienelemente 30 umfassen. Bei der Informationswiedergabe gemäß Programmpunkt 110 kann auch mindestens eines der Bedienelemente 30 zur interaktiven Anwendung der gerade aktivierten Funktion oder zur Steuerung des Programmablaufs der Testroutine aktiviert werden. Das oder die auf diese Weise entsprechend aktivierten Bedienelemente 30 können dazu beispielsweise durch Beleuchtung und/oder durch örtliche Zuordnung der Informationsdarstellung am Display 15 zum entsprechend aktivierten Bedienelement 30 bei benachbarter Anordnung der Bedieneinheit 35 und des Displays 15 markiert werden. Anschließend wird zu einem Programmpunkt 115 verzweigt. Bei Programmpunkt 115 prüft die Steuerung 10, ob an der Bedieneinheit 35 eine Benutzereingabe erfolgt ist. Ist dies der Fall, so wird zu einem Programmpunkt 120 verzweigt, andernfalls wird zu einem Programmpunkt 130 verzweigt. Bei Programmpunkt 120 prüft die Steuerung 10, ob durch die Benutzereingabe ein Prüfunterprogramm zur Überprüfung der gerade aktivierten Funktion aufgerufen wurde. Ist dies der Fall, so wird zu einem Programmpunkt 125 verzweigt, andernfalls wird zu einem Programmpunkt 145 verzweigt. Bei Programmpunkt 125 veranlaßt die Steuerung 10 den Aufruf eines Prüfunterprogramms aus dem Speicherbereich 5 für die Überprüfung der gerade aktivierten Funktion des Autoradios 1. Die gerade aktivierte Funktion kann dabei vom Benutzer interaktiv mittels der Bedieneinheit 35 aufgrund von am Display 15 und/oder am Lautsprecher 20 und/oder vom Drucker 25 wiedergegebenen Prüfinformationen geprüft werden. Die Prüfinformationen sind dabei ebenfalls im Speicherbereich 5 abgelegt und werden von der Steuerung 10 zur Durchführung des Prüfunterprogramms geladen und zur Wiedergabe am Display 15 und/oder am Lautsprecher 20 und/oder am Drucker 25 gebracht. Nach Programmpunkt 125 wird zu einem Programmpunkt 130 verzweigt. Bei Programmpunkt 130 prüft die Steuerung 10, ob das Ende der Testroutine erreicht wurde. Ist dies der Fall, so wird der Programmteil verlassen, andernfalls wird zu Programmpunkt 105 zurückverzweigt. Dabei wird die nächste Funktion des Autoradios 1 aktiviert und die zuletzt aktivierte Funktion des Autoradios 1 desaktiviert. Bei Programmpunkt 145 prüft die Steuerung 10, ob durch die Benutzereingabe eine interaktive Bedienung der gerade aktivierten Funktion des Autoradios 1 bewirkt wurde. Ist dies der Fall, so wird zu einem Programmpunkt 150 verzweigt, andernfalls wird zu einem Programmpunkt 140 verzweigt. Bei Programmpunkt 150 veranlaßt die Steuerung 10 auf der Grundlage der Benutzereingabe eine entsprechende Ansteuerung bzw. Anwendung der gerade aktivierten Funktion des Autoradios 1. Je nach Ansteuerung der gerade aktivierten Funktion kann durch die Benutzerbedienung auch ein Überspringen der gerade aktivierten Funktion bewirkt werden, zum Beispiel dann, wenn der Benutzer diese Funktion bereits kennt. In diesem Fall veranlaßt die Steuerung 10 bei Programmpunkt 150 die Desaktivierung der gerade aktivierten Funktion des Autoradios 1. Nach Programmpunkt 150 wird zu Programmpunkt 130 verzweigt. Bei Programmpunkt 140 prüft die Steuerung 10, ob durch die Benutzereingabe ein Abbruch der Testroutine bewirkt wurde. Ist dies der Fall, so wird der Programmteil verlassen, andernfalls wird zu Programmpunkt 130 verzweigt.

Das erfindungsgemäße Verfahren ist nicht auf Autoradios beschränkt. Es ist vielmehr auf alle elektrischen Geräte mit Bedienfunktionen anwendbar, beispielsweise auch auf Telefone, Mobilfunkgeräte, Fernseher, Compact-Disc-Tuner, Kassetten-Autoradio-Geräte, Compact-Disc-Changer, Compact-Disc-Spieler, Haushaltsgeräte wie zum Beispiel Waschmaschinen, usw.

## Patentansprüche

1. Verfahren zur Aktivierung von Funktionen eines elektrischen Gerätes (1), vorzugsweise eines Autoradios, **dadurch gekennzeichnet, daß** eine in einem dem Gerät (1) zugeordneten Speicherbereich (5) abgelegte Testroutine von einer Steuerung (10) des elektrischen Gerätes (1) abgearbeitet wird, daß von der Steuerung (10) aufgrund von in der Testroutine vorgegebenen Steuerbefehlen mindestens eine Funktion des elektrischen Gerätes (1) aktiviert wird und daß an einer Wiedergabevorrichtung (15, 20, 25) des elektrischen Gerätes (1) Informationen über die Bedienung der gerade aktivierten Funktion wiedergegeben werden.

2. Verfahren nach Anspruch 1, **dadurch gekennzeichnet, daß** in Abhängigkeit der Informationen mindestens ein Bedienelement (30) einer Bedieneinheit (35) des elektrischen Gerätes (1) der mindestens einen Funktion zugewiesen wird, so daß die mindestens eine Funktion durch das mindestens eine Bedienelement (30) ansteuerbar ist.

3. Verfahren nach Anspruch 1 oder 2, **dadurch gekennzeichnet, daß** an der Wiedergabevorrichtung (15, 20, 25) durch die Informationen Hinweise zur Aktivierung der mindestens einen Funktion durch mindestens ein Bedienelement (30) der Bedieneinheit (35) des elektrischen Gerät (1) wiedergegeben werden.

4. Verfahren nach Anspruch 1, 2 oder 3, **dadurch gekennzeichnet, daß** die Testroutine in Abhängigkeit der Betätigung mindestens eines Bedienelementes (30) der Bedieneinheit (35) des elektrischen Gerätes (1) von der Steuerung (10) abgearbeitet wird.

5. Verfahren nach einem der vorherigen Ansprüche, **dadurch gekennzeichnet, daß** die an der Wiedergabevorrichtung (15, 20, 25) in Abhängigkeit der Testroutine wiedergebbaren Daten in komprimierter Form im Speicherbereich (5) abgelegt werden.

6. Verfahren nach einem der vorherigen Ansprüche, **dadurch gekennzeichnet, daß** beim Abarbeiten der Testroutine durch die Steuerung (10) eine Überprüfung der mindestens einen Funktion durchgeführt wird.

7. Verfahren nach einem der vorherigen Ansprüche, **dadurch gekennzeichnet, daß** in Abhängigkeit der Testroutine im Speicherbereich (5) abgelegte Testsignale für Funktionseinstellungen des elektrischen Gerätes (1) von der Steuerung (10) aufgerufen werden.

8. Verfahren nach einem der vorherigen Ansprüche, **dadurch gekennzeichnet, daß** ein Speichermedium (40), das den Speicherbereich (5) umfaßt und in das elektrische Gerät (1) eingelegt ist, nur mit einer vorgegebenen Tastenkombination an der Bedieneinheit (35) freigegeben wird.

9. Verfahren nach einem der vorherigen Ansprüche, **dadurch gekennzeichnet, daß** die Informationen an einer Anzeigevorrichtung (15), einer akustischen Wiedergabeeinheit (20) und/oder einem Drucker (25) wiedergegeben werden.

10. Verfahren nach einem der vorherigen Ansprüche, **dadurch gekennzeichnet, daß** die Steuerbefehle der Testroutine in Lücken zwischen Sprach- und/oder Musikdaten auf einem als Audio-Compact-Disc ausgebildeten Speichermedium 40 gespeichert werden.

## Claims

1. Method for activating functions of an electrical appliance (1), preferably of a car radio, **characterized in that** a test routine which is stored in a memory area (5) associated with the appliance (1) is processed by a controller (10) for the electrical appliance (1), **in that** the controller (10) activates at least one function of the electrical appliance (1) on the basis of control commands which are predetermined in the test routine, and **in that** information about the operation of the currently activated function is reproduced on a reproduction apparatus (15, 20, 25) for the electrical appliance (1).

2. Method according to Claim 1, **characterized in that** at least one control element (30) of a control unit (35) of the electrical appliance (1) is assigned to the at least one function on the basis of the information, so that the at least one function can be actuated by the at least one control element (30).

3. Method according to Claim 1 or 2, **characterized in that** information relating to the activation of the at least one function by at least one control element (30) of the control unit (35) of the electrical appliance (1) is reproduced by the information on the reproduction apparatus (15, 20, 25).

4. Method according to Claim 1, 2 or 3, **characterized in that** the test routine is processed by the controller (10) as a function of the operation of at least one control element (30) of the control unit (35) of the electrical appliance (1).

5. Method according to one of the preceding claims, **characterized in that** the data which can be reproduced on the reproduction apparatus (15, 20, 25) as a function of the test routine is stored in compressed form in the memory area (5).

6. Method according to one of the preceding claims, **characterized in that**, while the controller (10) is processing the test routine, a check of the at least one function is carried out.

7. Method according to one of the preceding claims, **characterized in that** test signals which are stored in the memory area (5), for functional settings of the electrical appliance (1), are called up by the controller (10) as a function of the test routine.

8. Method according to one of the preceding claims, **characterized in that** a memory medium (40) which includes the memory area (5) and is inserted into the electrical appliance (1) is enabled only by a predetermined key combination on the control unit (35).

9. Method according to one of the preceding claims, **characterized in that** the information is reproduced on a display apparatus (15), an audible reproduction unit (20) and/or on a printer (25).

10. Method according to one of the preceding claims, **characterized in that** the control commands for the test routine are stored in gaps between voice and/or music data on a memory medium (40) in the form of an audio compact disc.

## Revendications

1. Procédé d'activation des fonctions d'un appareil électrique (1) de préférence d'un autoradio,
**caractérisé en ce que**
une routine de test enregistrée dans une zone de mémoire (5) associée à l'appareil (1) est déroulée par une commande (10) de l'appareil électrique (1),
du fait des ordres prédéterminés dans la routine de test, la commande (10) active au moins une fonction de l'appareil électrique (1) et
le dispositif de reproduction (15, 20, 25) de l'appareil électrique (1) reproduit des informations concernant l'utilisation de la fonction précisément activée.

2. Procédé selon la revendication 1,
**caractérisé en ce qu'**
en fonction des informations, au moins un élément de manoeuvre (30) d'une unité de manoeuvre (35) de l'appareil électrique (1) est attribué à au moins une fonction de sorte qu'au moins une fonction puisse être commandée par au moins un élément de manoeuvre (30).

3. Procédé selon la revendication 1 ou 2,
**caractérisé en ce que**
le dispositif de reproduction (15, 20, 25) donne des informations concernant des façons d'activer au moins une fonction d'au moins un élément de manoeuvre (30) de l'unité de manoeuvre (35) de l'appareil électrique (1).

4. Procédé selon la revendication 1, 2 ou 3,
**caractérisé en ce que**
la routine de test est développée en fonction de l'actionnement d'au moins un élément de manoeuvre (30) de l'unité de manoeuvre (35) de l'appareil électrique (1) par la commande (10).

5. Procédé selon l'une des revendications précédentes,
**caractérisé en ce que**
les données reproduites par le dispositif de reproduction (15, 20, 25) en fonction de la routine de test sont enregistrées dans la zone de mémoire (5) sous une forme comprimée.

6. Procédé selon l'une des revendications précédentes,
**caractérisé en ce que**
lors du déroulement de la routine de test par la commande (10), on effectue une vérification d'au moins une fonction.

7. Procédé selon l'une des revendications précédentes,
**caractérisé en ce qu'**
en fonction de la routine de test dans la zone de mémoire (5), les signaux de test enregistrés sont appelés pour régler le fonctionnement de l'appareil électrique (1) par la commande (10).

8. Procédé selon l'une des revendications précédentes,
**caractérisé par**
un support de mémoire (40) comprenant la zone de mémoire (5), enregistré dans l'appareil électrique (1) et que l'on peut seulement libérer par une combinaison prédéterminée de touches sur l'unité de manoeuvre (35).

9. Procédé selon l'une des revendications précédentes,
**caractérisé** en que
les informations sont reproduites par le dispositif d'affichage (15), par une unité de reproduction acoustique (20) et/ou une imprimante (25).

10. Procédé selon l'une des revendications précédentes,
**caractérisé en ce que**
les ordres de la routine de test sont enregistrés dans les intervalles entre les données vocales et/ou musicales sur un support de mémoire (40) en forme de disque compact audio.
